# EUROPÄISCHE PATENTSCHRIFT

(11) **EP 2 596 978 B1**
(45) Veröffentlichungstag und Bekanntmachung des Hinweises auf die Patenterteilung: **18.03.2015**
(21) Anmeldenummer: 11009330.9
(22) Anmeldetag: 24.11.2011
(51) Int. Cl.: B60L 1/02, B60L 11/18, B60H 1/00, B60P 3/20, F25B 27/00, B60L 8/00

(54) **Thermofahrzeug mit einer temperierten, thermisch isolierten Zelle**
Thermal vehicle with a tempered, thermally insulated cell
Véhicule thermique doté d'une cellule tempérée, isolée thermiquement

(43) Veröffentlichungstag der Anmeldung: 29.05.2013
(73) Patentinhaber: Kerstner GmbH, 68649 Gross-Rohrheim (DE)
(72) Erfinder: HÖLL, Michel, D-72534 Hayingen (DE)
(74) Vertreter: Schlimme, Wolfram

(56) Entgegenhaltungen:
- WO-A1-2010/002644
- DE-A1- 4 123 843
- US-A1- 2008 011 007
- US-A1- 2009 211 280

## Beschreibung

Die vorliegende Erfindung betrifft ein Thermofahrzeug mit einer temperierbaren, thermisch isolierten Zelle. Insbesondere betrifft die Erfindung ein Thermofahrzeug mit einer temperierbaren, thermisch isolierten Zelle, die als Kühlzelle ausgebildet ist. Die Zelle kann jedoch auch als Wärmezelle gestaltet sein. Demzufolge betrifft die Erfindung ein Thermofahrzeug bei welchem die Temperatur in der thermisch isolierten Zelle unabhängig von der Außentemperatur auf einem konstanten Temperaturniveau gehalten werden kann.

Eine Zelle im Sinne dieser Anmeldung ist ein geschlossener Raum, der mit einem umgebenden Gehäuse ein eigenständiges Gebilde darstellt oder der in das Gehäuse eines anderen Gebildes, beispielsweise in die Karosserie eines Kraftfahrzeugs, integriert ist.

Thermofahrzeuge, insbesondere Kühlfahrzeuge, sind ebenso wie temperierbare, thermisch isolierte Zellen als stationäre oder mobile Zellen bekannt. Beispiele dafür sind Kühlcontainer oder andere stationär oder mobil einsetzbare Thermobehälter, in deren Innenraum ein Temperaturniveau herrscht, welches unter oder über dem Umgebungstemperaturniveau liegt. Diese temperierbaren, thermisch isolierten Zellen und die solche Zellen aufweisenden Thermofahrzeuge weisen eine Temperiereinrichtung auf, die bei Wärmezellen von einer Heizung und bei Kühlzellen von einer Kältemaschine gebildet ist. Sowohl diese Heizung, als auch diese Kältemaschinen werden herkömmlicherweise unter Verbrauch von fossilen Brennstoffen betrieben. Kältemaschinen weisen dazu einen von einem Verbrennungsmotor angetriebenen Kältekompressor auf. Es gibt jedoch auch bereits in Kühlfahrzeugen Kältekompressoren, die von einem Elektromotor angetrieben werden, wobei die dafür vom Elektromotor aufgenommene elektrische Leistung von einem vom Verbrennungsmotor des Kühlfahrzeugs angetriebenen Generator erzeugt wird.

Diese bekannten Lösungen sind daher nicht für Einsatzzwecke geeignet, bei denen das Entstehen von Verbrennungsabgasen unerwünscht ist. So können die existierenden Lösungen nicht mit der aus Emissionsschutzgründen zunehmenden Elektromobilität in Einklang gebracht werden.

Aus der deutschen Gebrauchsmusterschrift DE 20 2007 012 724 U1 ist ein klimatisierter Container mit isolierten Wänden bekannt, der ohne Stromnetzanschluss an beliebigen Aufstellungsorten eingesetzt werden kann. Dieser Container verfügt über eine Energieversorgungseinheit, die einen Photovoltaik-Generator, mindestens einen mit regenerativen Energien betriebenen Backup-Generator und eine Vorrichtung zur Speicherung von elektrischer Energie (Akkumulator) aufweist. Die Kapazität des Akkumulators ist dabei so ausgelegt, dass sie ausreichend ist, um den anforderungsgerechten Betrieb mindestens einen Tag lang auch ohne nennenswerte Solarstrahlung aufrecht zu erhalten. Zur Klimatisierung ist eine Wärmepumpe vorgesehen, die sowohl zum Kühlen als auch zum Heizen des Containers genutzt werden kann.

Aus der DE 100 11 540 A1 ist ein stationärer Solar-Kühlcontainer bekannt, dessen Energieversorgung ausschließlich über Photovoltaikgeneratoren erfolgt und der zur Kühlung von Lebensmitteln oder Medikamenten oder technischen Geräten in sonnenscheinreichen, warmen Regionen eingesetzt wird. Über den vom Photovoltaikgenerator erzeugten elektrischen Strom wird eine Kälteanlage angetrieben und die von dieser erzeugte Kälte wird in einem Kälteenergiespeichersystem (Latentkältespeicher) gespeichert und bei Bedarf zur Kühlung des Containers genutzt. Eine Speicherung von elektrischer Energie, beispielsweise in einem Akkumulator, findet hier nicht statt, so dass die Kältemaschine auch nicht elektrisch betrieben werden kann, wenn keine Sonne scheint.

Aus der EP 1 279 907 A2 ist eine Kühleinheit für einen Kühlauflieger bekannt, deren Kompressor von einem Elektromotor angetrieben ist, der von einer Brennstoffzelle oder einer Batterie gespeist wird. Dieser Kühlauflieger wird üblicherweise von einer herkömmlichen Sattelzugmaschine mit Verbrennungsmotor gezogen.

Aus der WO 2010/002644 A1 ist ein Energiemanagementsystem für einen Kühl-LKW bekannt, bei welchem eine Kühleinheit vorgesehen ist, die mittels einer Brennkraftmaschine, die mechanisch direkt mit einem Kältekompressor gekoppelt ist, oder mittels eines Elektromotors, der ebenfalls wirksam an den Kältekompressor angekoppelt ist, betreibbar ist. Im Falle des elektrischen Betriebs der Kälteanlage bezieht der Elektromotor seine Energie direkt von einem mechanisch von der Brennkraftmaschine angetriebenen Generator, der die von ihm erzeugte elektrische Energie in einen 480 V-Wechselstrombus des Kühlfahrzeugs einleitet. Dieser Wechselstrombus ist einer von drei im gesamten Kühlfahrzeug vorgesehenen Stromversorgungsbus-Anordnungen, zu denen auch ein 120 V-Wechselstrombus und ein 12 V-Gleichstrombus gehören. Alle drei Strombusse stehen nicht nur der Kühleinrichtung zur Verfügung, sondern sind auch mit entsprechenden Einrichtungen (Generator oder Verbraucher) des Fahrzeugmotors des Kühlfahrzeugs und auch einer für die Klimaanlage der Kühlfahrzeugfahrerkabine vorgesehenen Hilfsstromversorgung verbunden. Zudem weist das Kühlfahrzeug eine Mehrzahl von Batterieanordnungen auf, die sämtlich dem 12 V-Gleichstrombus zugeordnet sind. Der 480 V-Wechselstrombus kann aus Hilfsbatterien, die dem 12 V-Gleichstrombus zugeordnet sind, über eine entsprechende Strom-Spannungswandlereinrichtung auch den 480 V-Wechselstrombus speisen. Die elektrische Energieversorgung für die Kühleinrichtung ist komplex und nicht autonom, da die elektrische Stromversorgung für die Kühleinrichtung über den 480 V-Wechselstrombus und den 12 V-Gleichstrombus sowohl mit der Fahrzeugantriebsmaschine und deren elektrischen Einrichtungen als auch mit der Hilfsstromversorgungseinheit für die Klimaanlage der Fahrerkabine verbunden ist.

Aus der DE 41 23 843 A1 ist ein Fahrzeug mit einem Kühlcontainer bekannt, bei welchem die Kühlanlage für den Kühlraum wahlweise von einem Elektromotor oder von einem an der Brennkraftmaschine oder an dem mit der Brennkraftmaschine verbundenen Schaltgetriebe angeschlossenen Hydrostatantrieb betrieben wird. Im Falle des Antriebs der Kühlanlage durch einen Elektromotor wird der Elektromotor entweder über einen Trafo von einem externen Stromnetz gespeist oder der Elektromotor für die Kühlanlage wird von einer im Fahrzeug befindlichen Traktionsbatterie oder einer weiteren Bordnetzbatterie gespeist. Der elektrische Kühlanlagenantrieb ist somit nur dann vom Fahrzeugantrieb autonom, wenn eine externe Stromquelle angeschlossen ist, also das Fahrzeug nicht mehr mobil ist.

Die US 2009/0211280 A1 beschreibt ein Heizungs-Lüftungs- und Klimatisierungssystem für ein Fahrzeug. Dieses System dient der Temperierung einer Fahrzeugkabine, nicht aber als Kühlsystem für ein Kühlfahrzeug. Der darin vorgesehene Kühlkompressor kann dann, wenn die Brennkraftmaschine des Fahrzeugs ausgeschaltet ist, mit niedrigerer Leistung von einem Elektromotor betrieben werden, welcher über Energiesteuerungseinrichtungen von der Starterbatterie des Fahrzeugs oder von einer anderen Energiequelle betrieben werden. Eine autonome Stromversorgung für eine Temperiereinrichtung eines Thermofahrzeugs, die wesentlich leistungsfähiger sein muss als eine leistungsschwache Stufe einer Fahrzeugklimaanlage, ist daraus nicht bekannt.

Aus der US 2008/0011007 A1 ist ein Fahrzeug mit einer isolierten Zelle bekannt, welche über eine Kühlanlage verfügt. Diese Kühlanlage wird elektrisch betrieben, wobei die elektrische Energie von einem Generator im Motorraum des Kühlfahrzeugs erzeugt wird, welcher von der Brennkraftmaschine angetrieben ist.

Aufgabe der vorliegenden Erfindung ist es, ein Thermofahrzeug mit einer temperierbaren, thermisch isolierten Zelle anzugeben, dessen Betrieb im stationären oder im mobilen Einsatz auch an Orten mit bestehenden Schadstoffemissionsbeschränkungen möglich ist.

Diese Aufgabe wird gelöst durch das Thermofahrzeug mit den Merkmalen des Patentanspruchs 1.

Dazu ist das Thermofahrzeug mit einer temperierbaren, thermisch isolierten Zelle ausgestattet, die gemäß der Erfindung versehen ist mit einem eine Gehäusewandung aufweisenden Gehäuse, einer thermisch isolierenden Wandung, die einen temperierbaren Innenraum umgrenzt und zumindest eine thermisch abdichtend verschließbare Zugangsöffnung zum Innenraum aufweist, einer elektrisch betreibbaren Temperiereinrichtung zur Temperierung des Innenraums und einer autonomen Stromversorgungseinrichtung für die Temperiereinrichtung, die so ausgestaltet ist, dass die Stromversorgung für die Temperiereinrichtung unabhängig von den Fahrzeugressourcen autark und emissionsfrei erfolgt, wobei das Thermofahrzeug elektrisch antreibbar ist und zumindest eine elektrische Antriebsmaschine sowie eine die Antriebsmaschine mit elektrischer Energie versorgende Antriebs-Stromversorgungseinrichtung aufweist.

Die temperierbare, thermisch isolierte Zelle dieses Thermofahrzeugs arbeitet aufgrund der vorgesehenen autonomen Stromversorgungseinrichtung ohne Fremdeinspeisung von elektrischer Energie autark und emissionsfrei. Dieses elektrisch antreibbare Thermofahrzeug ist daher besonders geeignet, in Innenstädten mit Schadstoffemissionsbeschränkungen eingesetzt zu werden. Auch kann die autarke temperierbare, thermisch isolierte Zelle dann weiter betrieben werden, wenn das Fahrzeug steht und der Fahrzeugantrieb abgeschaltet ist, beispielsweise beim Laden oder Entladen oder im Lieferverkehr während des Auslieferns. Der Einsatz des erfindungsgemäßen Thermofahrzeugs mit einer temperierbaren, thermisch isolierten Zelle ist besonders dann vorteilhaft, wenn das Thermofahrzeug in städtischen Umweltschutzzonen mit emissionsreglementiertem Kraftfahrzeugverkehr eingesetzt werden soll. Die elektrisch betreibbare Temperiereinrichtung und die der Zelle zugeordnete autonome Stromversorgungseinrichtung ermöglichen nicht nur während der Fahrt des Thermofahrzeugs einen abgasfreien, autonomen Betrieb der Temperiereinrichtung der Zelle, sondern gestatten es auch, die Temperiereinrichtung dann weiter zu betreiben, wenn das Fahrzeug zum Be- oder Entladen oder aus anderen Gründen anhält und sein beispielsweise aus einem Verbrennungsmotor bestehender Fahrzeugantrieb abgeschaltet ist. Es ist mit der Erfindung daher stets ein fortwährender Temperierbetrieb gewährleistet, so dass beispielsweise im Falle eines Kühlfahrzeugs die Kühlkette des im Innenraum der Zelle geladenen Kühlguts auch bei längeren Fahrtunterbrechungen nicht unterbrochen wird.

Eine besonders vorteilhafte Weiterbildung dieses Thermofahrzeugs zeichnet sich dadurch aus, dass die autonome Stromversorgungseinrichtung der temperierbaren, thermisch isolierten Zelle separat und zusätzlich zur Antriebs-Stromversorgungseinrichtung vorgesehen ist. Diese Konstruktion, bei der die Stromversorgungseinrichtung für den Fahrzeugantrieb vollständig von der Stromversorgungseinrichtung der temperierbaren, thermisch isolierten Zelle entkoppelt ist, erleichtert nicht nur die Ausrüstung eines serienmäßigen Fahrzeugs, beispielsweise eines Kastenwagens, mit einer erfindungsgemäßen Thermozelle, da bei deren Einbau keine Änderungen an der Antriebselektrik des Fahrzeugs vorgenommen werden müssen, sondern verhindert auch, dass die Leistung und Reichweite des elektrisch angetriebenen Thermofahrzeugs durch den Stromverbrauch der Aggregate der Thermozelle reduziert werden. Diese Vorteile treffen auch für Hybridfahrzeuge, die elektrisch und/oder über eine Brennkraftmaschine angetrieben werden können, zu, bei denen diese Erfindung auch realisiert sein kann.

Vorzugsweise weist die elektrisch betreibbare Temperiereinrichtung einen von einem Elektromotor antreibbaren Verdichter, einen mit einem elektrischen Gebläse versehenen Kondensatorwärmetauscher für ein Wärmetransportmittel, einen Expander, zum Beispiel ein Expansionsventil, und einen mit einem elektrischen Gebläse versehenen Verdampfungswärmetauscher auf, wobei das Wärmetransportmittel in einem den Verdichter, den Kondensatorwärmetauscher, den Expander und den Verdampfungswärmetauscher miteinander verbindenden Kreislauf strömt. Diese elektrisch betreibbare Temperiereinrichtung eignet sich besonders als Kühleinrichtung, wodurch die Zelle zu einer Kühlzelle wird. Genauso gut kann aber auch die im Verdichter oder in einer Wärmepumpe entstehende Wärme zur Heizung der thermisch isolierten Zelle genutzt werden.

Die Steuerung oder Regelung des Gebläses kann vorzugsweise derart erfolgen, dass das Gebläse, das dem im Innenraum vorgesehenen Wärmetauscher zugeordnet ist, auch dann noch läuft, wenn der Antrieb des Verdichters abgeschaltet worden ist. Dieser Nachlauf des Gebläses sorgt dafür, dass die noch im Wärmetransportmedium enthaltene Wärme beziehungsweise Kälte auch dann noch dem Innenraum zugeführt wird, wenn der Antrieb des Verdichters bereits abgeschaltet worden ist. Dadurch kann insbesondere im Falle einer Kälteanlage die im Innenraum herrschende Temperatur für eine gewisse Zeit noch weiter konstant gehalten werden, wobei gleichzeitig die Antriebsenergie für den Verdichterantrieb und das Kondensatorgebläse für eine vorgegebene Zeitspanne eingespart werden kann.

Besonders vorteilhaft sind Varianten, bei denen die autonome Stromversorgungseinrichtung eine Speichereinrichtung für elektrische Energie, vorzugsweise eine wiederaufladbare Batterieanordnung, wie zum Beispiel eine Lithium-Ionen-Batterieanordnung, und/oder eine Brennstoffzellenanordnung aufweist.

Vorzugsweise ist die Gehäusewandung der temperierbaren, thermisch isolierten Zelle zumindest abschnittsweise von der Karosserie des Thermofahrzeugs gebildet. Auch eine Trennwand im Inneren des Fahrzeugs, beispielsweise eine Trennwand an der Rückseite einer Fahrerkabine, kann einen Teil der Gehäusewandung der temperierbaren, thermisch isolierten Zelle bilden.

Besonders kompakt baut die erfindungsgemäße temperierbare, thermisch isolierte Zelle dann, wenn die autonome Stromversorgungseinrichtung oder ein Teil davon zwischen der Gehäusewandung und der thermisch isolierenden Wandung vorgesehen ist. Insbesondere ist es sinnvoll, bei einer Batterieanordnung oder einer Brennstoffzellenanordnung diese innerhalb des Gehäuses der Zelle, aber außerhalb des thermisch isolierten Innenraums anzuordnen. Auch ein eventuell vorgesehenes Steuergerät für die Lade-/Entladesteuerung der Batterieanordnung (Batteriemanagementsystem) oder ein Steuergerät für die Brennstoffzellenanordnung ist vorteilhafterweise zwischen der Gehäusewandung und der thermisch isolierenden Wandung vorgesehen. Dadurch wird einerseits ein kompakter integrierter Aufbau der gesamten Zelle erzielt und andererseits werden die Stromversorgungseinrichtung und das Steuergerät dafür vor einer im Kühlbetrieb niedrigen Temperatur im temperierten Innenraum geschützt.

Besonders vorteilhaft ist es, wenn die autonome Stromversorgungseinrichtung oder ein Teil davon zumindest teilweise in eine zugeordnete Ausnehmung der thermisch isolierenden Wandung eingreift. Auch diese Ausführungsform zeichnet sich durch einen besonders kompakten Aufbau aus.

In einer anderen bevorzugten Ausgestaltung der vorliegenden Erfindung ist im Bereich der autonomen Stromversorgungseinrichtung in der Gehäusewandung und/oder in der thermisch isolierenden Wandung zumindest eine verschließbare Öffnung für den Zugang zur autonomen Stromversorgungseinrichtung oder zu Teilen davon vorgesehen. Diese beispielsweise durch eine Serviceklappe in der Gehäusewandung oder durch ein entfernbares Element der isolierenden Wandung verschließbare Öffnung erleichtert den Zugang zur autonomen Stromversorgungseinrichtung oder zu Teilen davon im Falle eines durchzuführenden Services oder einer durchzuführenden Reparatur. Besonders vorteilhaft ist es, wenn diese verschließbare Öffnung in der Gehäusewandung vorgesehen ist, da dann ein Service oder eine Reparatur an der Stromversorgungseinrichtung oder an Teilen davon von der Außenseite durchgeführt werden kann, ohne den thermisch isolierten Innenraum zu öffnen, sodass die Temperatur im Innenraum während der Service- oder Reparaturtätigkeit auch dann im Wesentlichen gleich bleibt, wenn aufgrund der durchzuführenden Arbeiten die Temperiereinrichtung zeitweise außer Betrieb ist.

Besonders vorteilhaft ist es auch, wenn die Gehäusewandung und/oder die thermisch isolierende Wandung im Bereich der autonomen Stromversorgungseinrichtung brandhemmend ausgebildet ist. Dadurch wird erreicht, dass selbst im Falle einer unerwartenden Hitzeentwicklung im Bereich der autonomen Stromversorgungseinrichtung ein Schmelzen der Gehäusewandung beziehungsweise ein Schmelzen der thermisch isolierenden Wandung und damit eine Zerstörung der jeweiligen Wandung weitgehend verhindert ist. Auch im Falle einer derartigen überdurchschnittlichen Temperatursteigerung im Bereich der Stromversorgungseinrichtung ist somit die Unversehrtheit der thermischen Isolierung des Innenraums gewährleistet. Es ist ebenfalls vorteilhaft, in diesem Bereich eine Brandmeldeeinrichtung vorzusehen, die den Fahrer im Falle des Entstehens eines Brandes im Bereich der Stromversorgungseinrichtung alarmiert und gegebenenfalls sogar automatisch eine dort vorgesehene Feuerlöscheinrichtung auslöst.

Die Temperiereinrichtung kann eine Kühleinrichtung und/oder eine Heizeinrichtung aufweisen, sodass die temperierbare Zelle eine Kühlzelle oder eine Wärmezelle bildet und die Innentemperatur der Zelle unabhängig von der Außentemperatur konstant gehalten werden kann.

Weist das Thermofahrzeug eine Bremsenergierückgewinnungseinrichtung auf, so ist es besonders vorteilhaft, wenn die durch diese Einrichtung beim Bremsen rekuperierte elektrische Energie nicht nur in die Antriebs-Stromversorgungseinrichtung des Fahrzeugs, sondern auch in die autonome Stromversorgungseinrichtung der Thermozelle oder sogar ausschließlich in die autonome Stromversorgungseinrichtung der Thermozelle eingespeist wird. Auf diese Weise kann der autonomen Stromversorgungseinrichtung für die Thermozelle elektrische Energie zum Wiederaufladen von deren Batterien zugeführt und somit die Einsatzdauer der temperierbaren, thermisch isolierten Zelle verlängert werden.

Besitzt das Thermofahrzeug, insbesondere dann, wenn es sich um ein elektrisches Thermofahrzeug handelt, eine elektrische Heizung für die Fahrerkabine, so ist es von Vorteil, wenn diese elektrische Heizung von der autonomen Stromversorgungseinrichtung der temperierbaren Zelle zumindest teilweise mit elektrischer Energie versorgt wird. Diese Energieabgabe von der autonomen Stromversorgungseinrichtung an die elektrische Heizung der Fahrerkabine kann im Bedarfsfall die Antriebs-Stromversorgungseinrichtung entlasten und somit die Reichweite des Fahrzeugs erhöhen. Insbesondere im Falle eines Kühlfahrzeugs ist eine derartige Ausgestaltungsform sinnvoll, denn die autonome Stromversorgungseinrichtung für die temperierbare Zelle ist regelmäßig für den Betrieb mit einer wärmeren Jahreszeit dimensioniert und wird in einer kälteren Jahreszeit, in der die Heizung für die Fahrerkabine benötigt wird, nicht so stark beansprucht, da der Kälteverlust im Innenraum der Kühlzelle in der kälteren Jahreszeit verhältnismäßig gering ist. In diesem Winter-Einsatzszenario kann die autonome Stromversorgungseinrichtung für die Kältemaschine der Temperiereinrichtung somit nicht benötigte elektrische Energie der Fahrerkabinenheizung zur Verfügung stellen.

Es ist auch vorteilhaft, wenn die von einem nicht den Innenraum der temperierbaren, thermisch isolierenden Zelle temperierenden Wärmetauscher abgegebene Wärme beziehungsweise Kälte zur Klimatisierung der Kabine des Thermofahrzeugs genutzt wird. Auch diese Ausgestaltung des Thermofahrzeugs ist insbesondere bei einem elektrischen Kühlfahrzeug von Vorteil, weil dort aufgrund der fehlenden Brennkraftmaschine keine Motorabwärme zur Verfügung steht, die für die Heizung der Fahrerkabine genutzt werden kann. Bei einem Kühlfahrzeug wird die beim Betrieb der Kältemaschine entstehende Wärme üblicherweise nach außen abgegeben und erwärmt die Fahrzeugumgebung. Diese in der Kältemaschine entstehende Abwärme wird bei dieser Weiterbildung der vorliegenden Erfindung entweder direkt als Warmluft oder indirekt über ein Wärmetransportmedium in das Innere der Fahrerkabine geleitet, um diese zu erwärmen.

Vorzugsweise ist auf oder am Fahrzeug eine Photovoltaikeinrichtung, beispielsweise eine Solarzellenanordnung vorgesehen, die der Speichereinrichtung für elektrische Energie und/oder der Temperiereinrichtung elektrische Energie zuführt. Dadurch lässt sich die Betriebsdauer der Temperiereinrichtung insbesondere in der heißen und sonnenscheinreichen Sommerzeit deutlich verlängern.

Die Erfindung wird nachfolgend anhand eines Beispiels unter Bezugnahme auf die Zeichnung näher erläutert; in dieser zeigt:
- **Fig. 1**: ein erstes Beispiel eines Thermofahrzeugs mit einer temperierbaren, thermisch isolierten Zelle gemäß der vorliegenden Erfindung;
- **Fig. 2**: ein zweites Beispiel eines Thermofahrzeugs gemäß der vorliegenden Erfindung und
- **Fig. 3**: eine schematische Darstellung eines Kühlkreislaufs für eine als Kühlzelle ausgebildete temperierbare, thermisch isolierte Zelle.

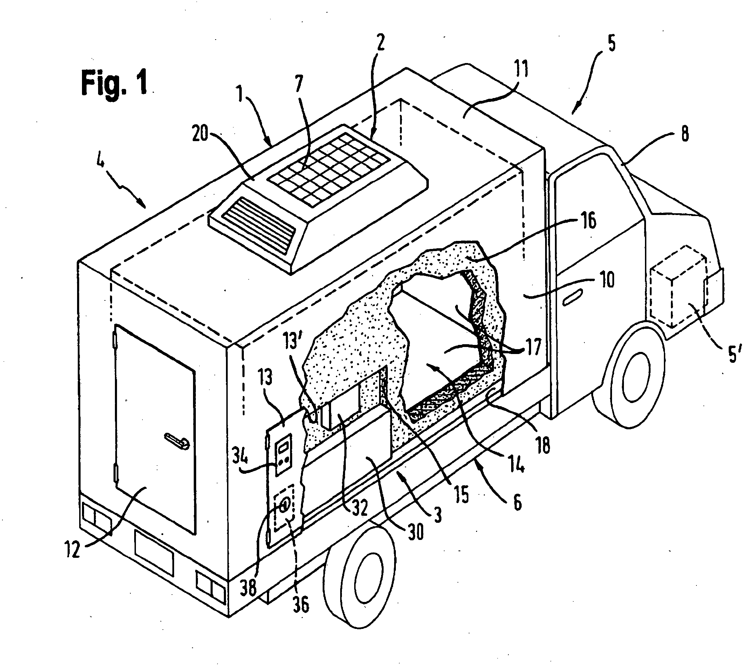

In Fig. 1 ist in teilweise geschnittener perspektivischer Ansicht ein Thermofahrzeug 5 mit einer temperierbaren, thermisch isolierten Zelle gemäß der Erfindung dargestellt. Die temperierbare, thermisch isolierte Zelle 4 ist als Kasten oder Container ausgebildet, der auf dem Fahrgestell 6 eines Lastkraftwagens separat von der Fahrerkabine 8 angebracht ist. Das Thermofahrzeug 5 ist im Beispiel als Hybrid-Fahrzeug mit einem Verbrennungsmotor und einer elektrischen Antriebsmaschine sowie einer Antriebs-Stromversorgungseinrichtung 5' ausgestaltet.

Die Zelle weist ein blockartiges Gehäuse 1 mit einer äußeren Gehäusewandung 10 auf. Eine Tür 12 ist in der rückwärtigen Stirnseite des Gehäuses 1 in der Gehäusewandung 10 vorgesehen und bildet eine thermisch abdichtend verschließbare Zugangsöffnung zum Innenraum 14 des Gehäuses 1. Der Innenraum 14 ist umgeben von einer thermisch isolierenden Wandung 16, die innerhalb der Gehäusewandung 10 vorgesehen ist und die zumindest abschnittsweise unter Ausbildung eines Hohlraums 18 von der Gehäusewandung 10 beabstandet ist. Der Hohlraum 18 ist nicht zwingend erforderlich, kann sich aber an einigen Stellen dadurch ergeben, dass auf der Innenseite der Gehäusewandung 10 Verstärkungsstreben oder andere Unregelmäßigkeiten der Gehäusewandung vorgesehen sind, zwischen denen sich der Hohlraum 18 ausbildet, oder er kann gezielt vorgesehen werden.

Die zum Innenraum 14 weisenden Oberflächen der thermisch isolierenden Wandung 16 sind mit einer Innenwand 17 aus Kunststoff oder Leichtmetall versehen.

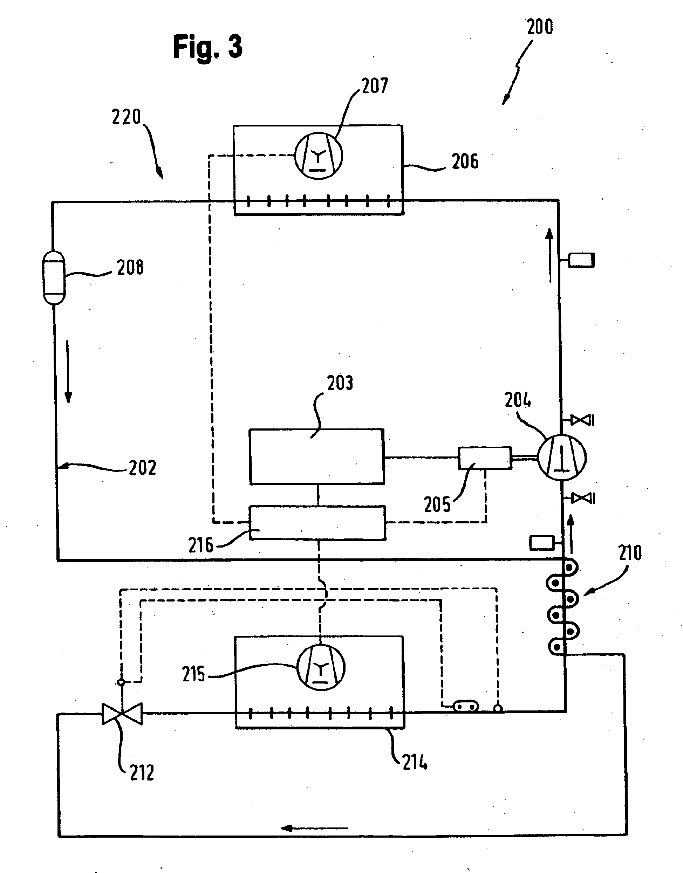

Auf dem Dach 11 des Gehäuses 1 ist eine elektrisch betreibbare Temperiereinrichtung 2 zur Temperierung des Innenraums 14 angeordnet. Die Temperiereinrichtung 2 kann aber genausogut an anderer Stelle des Gehäuses 1, beispielsweise an einer Seitenwand, vorgesehen sein. Die Temperiereinrichtung 2 ist im gezeigten Beispiel, in welchem die thermisch isolierte Zelle eine Kühlzelle bildet, als Kühlaggregat 20 ausgebildet. Die Funktionsweise dieses Kühlaggregats 20 wird weiter unten in Verbindung mit Fig. 3 beschrieben. Zur Energieversorgung für die Temperiereinrichtung 2 ist eine autonome Stromversorgungseinrichtung 3 vorgesehen. Zudem sind auf der oberen Außenfläche der Temperiereinrichtung Solarzellen einer Photovoltaikeinrichtung 7 angebracht, die die Stromversorgungseinrichtung 3 mit elektrischer Energie versorgt. Weitere Solarzellen können auch auf anderen Außenflächen der Temperiereinrichtung 2 und/oder auf den Außenflächen der Gehäusewandung 10 vorgesehen sein.

Die autonome Stromversorgungseinrichtung 3 ist in dem Zwischenraum zwischen der Gehäusewandung 10 und der thermisch isolierenden Wandung 16 angeordnet. Eine in der Gehäusewandung 10 in dem Abschnitt des Gehäuses 1, in welchem die Stromversorgungseinrichtung 3 gelegen ist, angeordnete Serviceklappe 13 verschließt eine Öffnung 13' in der Gehäusewandung 10, durch welche ein Zugang zur Stromversorgungseinrichtung 3 ermöglicht ist.

In diesem Aufnahmebereich für die Stromversorgungseinrichtung 3 ist die thermisch isolierende Wandung 16 an ihrer zur Gehäusewandung 10 weisenden Seite mit einer sich zur Gehäusewandung 10 hin öffnenden Ausnehmung 15 versehen, die Teile der Stromversorgungseinrichtung 3 aufnimmt.

Die Stromversorgungseinrichtung 3 besteht im gezeigten Beispiel im Wesentlichen aus einer wiederaufladbaren Batterieanordnung 30 sowie einem Steuergerät 32, welches sowohl das Aufladen der Batterieanordnung 30, als auch die Stromentnahme aus der Batterieanordnung 30 steuert oder regelt. Des Weiteren weist die Stromversorgungseinrichtung 3 eine Bedieneinrichtung 34, die im gezeigten Beispiel als Schalttafel in der Serviceklappe 13 vorgesehen ist. Zur Stromversorgungseinrichtung 3 gehört auch eine Ladestation 36, die in Fig. 1 nur schematisch dargestellt ist und die über einen in der Serviceklappe 13 vorgesehenen Steckverbinder 38 zum Wiederaufladen der Batterieanordnung 30 mit einer externen elektrischen Energiequelle verbindbar ist.

Die in Fig. 1 gezeigte blockartige thermisch isolierte Zelle kann beispielsweise auch stationär an Bedarfsstandorten aufgestellt werden, an denen keine elektrische Stromversorgung zur Verfügung steht und an denen der Betrieb eines mit einem Verbrennungsmotor versehenen Generators oder eines mit einem Verbrennungsmotor versehenen Kältekompressors nicht möglich ist. Die blockartige Zelle gemäß Fig. 1 kann zudem als autark betreibbarer temperierbarer Container mobil eingesetzt werden.

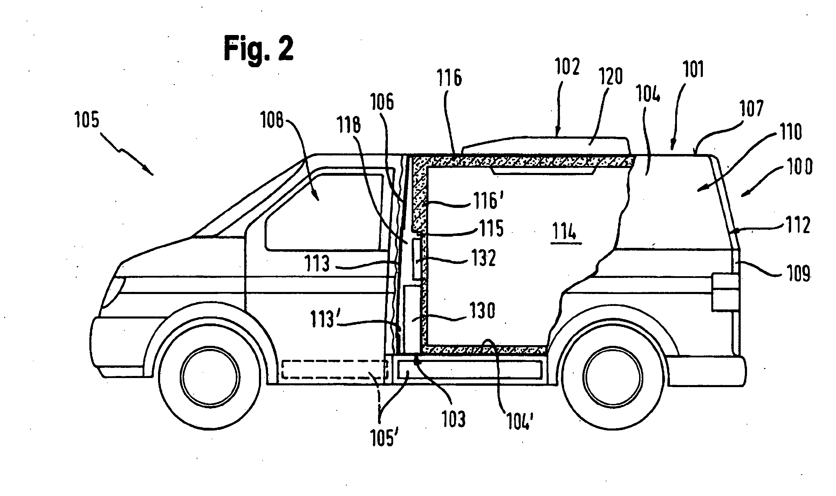

Eine alternative Ausgestaltung eines Thermofahrzeugs gemäß der Erfindung mit einer temperierbaren, thermisch isolierten Zelle ist in Fig. 2 dargestellt. Dort ist die thermisch isolierte Zelle 100 in den Laderaum eines Kastenwagens integriert. Das Gehäuse 101 der thermisch isolierten Zelle wird vom hinteren Bereich der Fahrzeugkarosserie 104 des Thermofahrzeugs 105 gebildet, wobei die vordere Gehäusewand der thermisch isolierten Zelle von einer Rückwand 106 der Fahrerkabine 108 gebildet ist. Der hintere Bereich der Fahrzeugkarosserie 104, die Rückwand 106 und die Heckklappe 109 bilden zusammen mit dem Fahrzeugdach 107 und dem Laderaumboden 104' das Gehäuse 110 der Zelle 100. Der Zugang zum Innenraum 114 der thermisch isolierten Zelle 100 erfolgt durch die am Heck des Fahrzeugs vorgesehene Hecktür oder Heckklappe 109, die eine thermisch abdichtend verschließbare Zugangsöffnung 112 für den Innenraum 114 bildet.

Zwischen der bauartbedingt schräg stehenden Rückwand 106 der Fahrerkabine 108 und der in Fahrrichtung vorderen Abschlusswand 116' der thermisch isolierenden Wandung 116 ist ein Hohlraum 118 gebildet, in welchem die Batterieanordnung 130 und das Steuergerät 132 der Stromversorgungseinrichtung 103 untergebracht sind. Auch hier ist zur Vergrößerung des Hohlraums 118 eine Ausnehmung 115 in der Außenseite der thermisch isolierenden Wandung 116 vorgesehen, die zur teilweisen Aufnahme der Stromversorgungseinrichtung 103 oder von Teilen davon dient. Der Zugang zu diesem Hohlraum 118 wird durch eine Öffnung 113' in der Rückwand 106 der Fahrerkabine 108 ermöglicht. Die Öffnung 113' ist mit einer Serviceklappe 113 verschließbar.

Alternativ können die Batterieanordnung 130 und das Steuergerät 132 und gegebenenfalls auch andere Elemente der Stromversorgungseinrichtung 103 für die Temperiereinrichtung 102, beispielsweise auf der Fahrerseite hinter der Fahrerkabine 108, hinter einer Tür oder Klappe des Fahrzeugs, beispielsweise einer seitlichen Schiebetür, zwischen der Tür oder Klappe und der thermisch isolierenden Wandung 116, gegebenenfalls auch in einem hier vorgegebenen Hohlraum und/oder einer Ausnehmung wie im Beispiel der Fig. 1, angeordnet sein. Diese Lösung ist besonders von Vorteil, wenn das Fahrzeug im Bereich der thermisch isolierten Zelle 100 mit einer Tür oder Klappe versehen ist, die für den Zugang zum Innenraum 114 der thermisch isolierten Zelle 100 nicht benötigt wird.

Die elektrisch betreibbare Temperiereinrichtung 102, die im Beispiel der Fig. 2 als Kühlgerät ausgebildet ist, ist auf dem und im Dach 107 des Fahrzeugs 105 angeordnet. Die Kühlung des Innenraums 114 erfolgt wie auch im ersten Beispiel im Umluftbetrieb. Daher kann die Temperiereinrichtung 102 auch als sogenanntes Split-Gerät aufgebaut sein, dessen wärmeaufnehmender Kühl-Wärmetauscher mit dem ihm zugeordneten Gebläse im Innenraum 114 vorgesehen ist und dessen wärmeabgebender Kondensatorwärmetauscher außerhalb der Kühlzelle an einem beliebigen Einbauort im oder am Fahrzeug 105 vorgesehen ist.

Zusätzlich zur Temperierung des Innenraums 114 kann (wie auch im Beispiel der Fig. 1) eine Luftfeuchtigkeitssteuerung, beispielsweise eine Befeuchtungseinrichtung, vorgesehen sein, um eine aufgrund der Temperierung des Innenraums hervorgerufene Änderung der Luftfeuchtigkeit beispielsweise durch Entfeuchten oder Befeuchten der Luft zu kompensieren.

Das Fahrzeug 105 ist ein Elektrofahrzeug, das eine Antriebs-Stromversorgungseinrichtung 105' aufweist, die beispielsweise von einer in Fig. 2 im Unterflurbereich des Fahrzeugs angeordneten Batterieanordnung gebildet ist. Selbstverständlich sind auch andere Stromversorgungseinrichtungen für den Fahrzeugantrieb denkbar, wie beispielsweise eine Brennstoffzelle.

Wie im Beispiel der Fig. 2 zu erkennen ist, sind in dem Thermofahrzeug 105 zwei separate Stromversorgungseinrichtungen, nämlich die Antriebs- Stromversorgungseinrichtung 105' für den Fahrzeugantrieb und die autonome Stromversorgungseinrichtung 103 für die Temperiereinrichtung 102 der thermisch isolierten Zelle 100 vorgesehen. Dies ermöglicht es, die Temperiereinrichtung 102 unabhängig von den Fahrzeugressourcen zu betreiben, sodass Leistung und Reichweite des Fahrzeugs durch den Betrieb der Temperiereinrichtung 102 nicht beeinträchtigt werden.

In Fig. 3 ist ein Prozessschaubild der Funktionsweise eines Kühlkreislaufs für eine als Kühlzelle ausgebildete temperierbare, thermisch isolierte Zelle dargestellt. Dieses Schaubild zeigt somit die wesentlichen Elemente der als Kühlaggregat 220 ausgebildeten Temperiereinrichtung 200. Ein geschlossenes Leitungssystem 202 bildet einen Kühlmittelkreislauf, in welchem ein Kühlmittel umgepumpt wird, wie dies in Fig. 3 durch die Pfeile dargestellt ist. Das Kühlmittel wechselt dabei zwischen einem flüssigen und einem gasförmigen Zustand. Das gasförmige Kühlmittel wird in einem Verdichter 204 komprimiert und unter Abgabe von Wärme in einem Kondensatorwärmetauscher 206 verflüssigt. Der Verdichter 204 wird von einem Elektromotor 205 angetrieben, der von der autonomen Stromversorgungseinrichtung 203 mit elektrischer Energie versorgt wird. Das verflüssigte Kühlmittel verlässt den Kondensatorwärmetauscher 206 durch einen Trockner 208 und strömt durch einen Gegenstromwärmetauscher 210, in dem es weiter abgekühlt wird, zu einem als Expansionsventil ausgestalteten Expander 212. Nach dem Verlassen des Expansionsventils tritt das Kühlmittel in einen Niederruckbereich des Leitungssystems 202 ein und entspannt sich dort unter Aufnahme von Wärme in einem Verdampfungswärmetauscher 214. Die dabei aus der Umgebung vom Kühlmittel über den Verdampfungswärmetauscher 214 aufgenommene Wärmeenergie wird somit der Umgebung entzogen, sodass die Umgebung im Bereich des Verdampfungswärmetauschers 214 abgekühlt wird. Mittels eines dem Verdampfungswärmetauscher 214 zugeordneten Gebläses 215 wird Luft aus der Umgebung durch den Verdampfungswärmetauscher 214 hindurch oder an diesem vorbei geblasen, die sich dabei abkühlt und die anschließend in den Innenraum 14, 114 der Kühlzelle strömt und diesen herunterkühlt. Der Trockner 208 kann zusätzlich auch als Sammler ausgebildet sein, der einen zusätzlichen Kühlmittelvorrat aufnimmt. Dieser Trockner 208 ist somit eine Kombination aus Trockner und Sammler.

Nach Verlassen des Verdampfungswärmetauschers 214 strömt das nunmehr gasförmige Kühlmittel durch den Gegenstromwärmetauscher 210 und entzieht dort noch dem im Gegenstrom durch diesen Wärmetauscher 210 strömenden flüssigen Kältemittelstrom Wärmeenergie bevor das gasförmige Kühlmittel dann wieder zum Verdichter 204 strömt und der Zyklus von neuem beginnt.

Ist die Temperiereinrichtung 2, 102, 200 als Kühlzelle ausgebildet, so befindet sich der im unteren Teil der Fig. 3 dargestellte Verdampfungswärmetauscher 214 im Innenraum 14, 114 der Kühlzelle oder steht zumindest in Luft-Strömungsverbindung mit dem Innenraum. Der im oberen Bereich der Fig. 3 dargestellte Kondensatorwärmetauscher 206, dem ebenfalls ein Gebläse 207 zugeordnet ist, ist außerhalb des Innenraums 14, 114 der Kühlzelle angeordnet. Die vom Gebläse 207 durch den Wärmetauscher 206 geleitete Luft erwärmt sich beim Hindurchtreten durch den Wärmetauscher 206 und wird entweder an die Umgebung abgegeben oder über einen (in Fig. 2 nicht dargestellten) Strömungskanal in die Fahrerkabine 108 als Heizluft eingeleitet. Alternativ kann in Luft-Strömungsrichtung hinter dem Kondensatorwärmetauscher 206 ein zusätzlicher Wärmetauscher eines Kabinenheizungskreislaufs angebracht sein, der ein im Kabinenheizungskreislauf strömendes Wärmetransportmedium (beispielsweise Wasser) erwärmt, das dann in die Fahrzeugkabine geleitet wird und dort über einen Heizungswärmetauscher die Wärme an die Luft in der Fahrzeugkabine abgibt.

Sowohl der Verdichter 204 als auch die Gebläse 207 und 215 der in Fig. 3 beispielhaft als Kühlaggregat dargestellten Temperiereinrichtung 200 werden elektrisch betrieben und beziehen ihre elektrische Energie aus der autonomen Stromversorgungseinrichtung 203, die der autonomen Stromversorgungseinrichtung 3 beziehungsweise 103 in Fig. 1 beziehungsweise Fig. 2 entspricht.

Eine Steuerungseinrichtung 216 steuert oder regelt den Betrieb der Temperiereinrichtung 200, insbesondere den Betrieb des Verdichters 204 und der Gebläse 207, 215 in Abhängigkeit der von einem Temperatursensor im Innenraum 14, 114 ermittelten Temperatur und einer vorgegebenen Temperatur. Das für den Innenraum vorgesehene Gebläse 215 ist zudem mit einem Nachlauf versehen, der das Gebläse auch dann noch betreibt, wenn der Antrieb 205 des Verdichters 204 schon abgeschaltet ist. Das Gebläse 215 läuft dabei so lange nach, bis die Temperatur im Abluftstrom unmittelbar hinter dem für den Innenraum 14, 114 vorgesehenen Wärmetauscher 214 der im Innenraum herrschenden Temperatur entspricht oder die Differenz dieser beiden Temperaturen einen vorgesehenen Wert unterschreitet, wobei die Temperatur im Abluftstrom noch unter der Innenraumtemperatur liegt.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Gehäuse
- 2: elektrisch betreibbare Temperiereinrichtung
- 3: autonome Stromversorgungseinrichtung
- 4: thermisch isolierte Zelle
- 5: Thermofahrzeug
- 5': Antriebs-Stromversorgungseinrichtung
- 6: Fahrgestell
- 7: Photovoltaikeinrichtung
- 8: Fahrerkabine
- 10: Gehäusewandung
- 11: Dach
- 12: Tür
- 13: Serviceklappe
- 13': Öffnung
- 14: Innenraum
- 15: Ausnehmung
- 16: thermisch isolierende Wandung
- 17: Innenwand
- 18: Hohlraum
- 20: Kühleinrichtung
- 30: Speichereinrichtung für elektrische Energie (wiederaufladbare Batterieanordnung)
- 32: Steuergerät
- 34: Bedieneinrichtung
- 36: Ladestation
- 38: Steckverbinder
- 100: thermisch isolierte Zelle
- 101: Gehäuse
- 102: Temperiereinrichtung
- 103: Stromversorgungseinrichtung
- 104: Fahrzeugkarosserie
- 104': Laderaumboden
- 105: Fahrzeug
- 105': Antriebs-Stromversorgungseinrichtung
- 106: Rückwand
- 107: Dach
- 108: Fahrerkabine
- 109: Heckklappe
- 110: Gehäusewandung
- 112: Zugangsöffnung
- 113: Serviceklappe
- 113': Öffnung
- 114: Innenraum
- 115: Ausnehmung
- 116: thermisch isolierende Wandung
- 116': vordere Abschlusswand
- 118: Hohlraum
- 120: Kühleinrichtung
- 130: Speichereinrichtung für elektrische Energie (wiederaufladbare Batterieanordnung)
- 132: Steuergerät
- 200: Temperiereinrichtung
- 202: geschlossenes Leitungssystem
- 203: autonome Stromversorgungseinrichtung
- 204: Verdichter
- 205: Elektromotor
- 206: Kondensatorwärmetauscher
- 207: Gebläse
- 208: Trockner
- 210: Gegenstromwärmetauscher
- 212: Expansionsventil
- 214: Verdampfungswärmetauscher
- 215: Gebläse
- 216: Steuerungseinrichtung
- 220: Kühleinrichtung
- 230: Speichereinrichtung für elektrische Energie

## Patentansprüche

1. Thermofahrzeug mit einer temperierbaren, thermisch isolierten Zelle, die versehen ist mit
- einem eine Gehäusewandung (10; 110) aufweisenden Gehäuse (1; 101);
- einer thermisch isolierenden Wandung (16; 116), die einen temperierbaren Innenraum (14; 114) umgrenzt und zumindest eine thermisch abdichtend verschließbare Zugangsöffnung (12; 112) zum Innenraum (14; 114) aufweist;
- einer elektrisch betreibbaren Temperiereinrichtung (2; 102; 200) zur Temperierung des Innenraums (14; 114) und
- einer autonomen Stromversorgungseinrichtung (3; 103; 203) für die Temperiereinrichtung (2; 102; 200), die so ausgestaltet ist, dass die Stromversorgung für die Temperiereinrichtung unabhängig von den Fahrzeugressourcen autark und emissionsfrei erfolgt,
- wobei das Thermofahrzeug (5; 105) elektrisch antreibbar ist und zumindest eine elektrische Antriebsmaschine sowie eine die Antriebsmaschine mit elektrischer Energie versorgende Antriebs-Stromversorgungseinrichtung (5'; 105') aufweist.

2. Thermofahrzeug nach Anspruch 1,
**dadurch gekennzeichnet,**
**dass** die autonome Stromversorgungseinrichtung (3; 103) für die temperierbare, thermisch isolierte Zelle (4; 100) zusätzlich zu und separat von der Antriebs-Stromversorgungseinrichtung (5'; 105') vorgesehen ist.

3. Thermofahrzeug nach Anspruch 1 oder 2,
**dadurch gekennzeichnet,**
**dass** die elektrisch betreibbare Temperiereinrichtung (2; 102; 200) einen von einem Elektromotor (205) antreibbaren Verdichter (204), einen mit einem elektrischen Gebläse (207) versehenen Kondensatorwärmetauscher (206) für ein Wärmetransportmittel, einen Expander (212) und einen mit einem elektrischen Gebläse (215) versehenen Verdampfungswärmetauscher (214) aufweist, wobei das Wärmetransportmittel in einem den Verdichter (204), den Kondensatorwärmetauscher (206), den Expander (212) und den Verdampfungswärmetauscher (214) miteinander verbindenden Kreislauf (202) strömt.

4. Thermofahrzeug nach Anspruch 3,
**dadurch gekennzeichnet,**
**dass** die Steuerung oder Regelung des Gebläses (215), das dem im Innenraum (14, 114) vorgesehenen Wärmetauscher (214) zugeordnet ist, derart erfolgt, dass das Gebläse (215) auch dann noch läuft, wenn der Antrieb (205) des Verdichters (204) abgeschaltet worden ist.

5. Thermofahrzeug nach einem der vorhergehenden Ansprüche,
**dadurch gekennzeichnet,**
**dass** die autonome Stromversorgungseinrichtung (3; 103; 203) eine Speichereinrichtung (30; 130; 230) für elektrische Energie, vorzugsweise eine wiederaufladbare Batterieanordnung, und/oder eine Brennstoffzellenanordnung aufweist.

6. Thermofahrzeug nach einem der vorhergehenden Ansprüche,
**dadurch gekennzeichnet,**
**dass** die Gehäusewandung (110) der temperierbaren, thermisch isolierten Zelle (100) zumindest abschnittsweise von der Karosserie (104) des Thermofahrzeugs (105) gebildet ist.

7. Thermofahrzeug nach einem der vorhergehenden Ansprüche,
**dadurch gekennzeichnet,**
**dass** die autonome Stromversorgungseinrichtung (3; 103) oder ein Teil davon zwischen der Gehäusewandung (10; 110) und der thermisch isolierenden Wandung (16; 116) vorgesehen ist.

8. Thermofahrzeug nach Anspruch 7,
**dadurch gekennzeichnet,**
**dass** die autonome Stromversorgungseinrichtung (3; 103) oder ein Teil davon zumindest teilweise in eine zugeordnete Ausnehmung (15; 115) der thermisch isolierenden Wandung (16; 116) eingreift.

9. Thermofahrzeug nach Anspruch 7 oder 8,
**dadurch gekennzeichnet,**
**dass** im Bereich der autonomen Stromversorgungseinrichtung (3; 103) in der Gehäusewandung (10; 110) und/oder in der thermisch isolierenden Wandung (16; 116) zumindest eine verschließbare Öffnung (13'; 113') für den Zugang zur autonomen Stromversorgungseinrichtung (3; 103) oder zu Teilen davon vorgesehen ist.

10. Thermofahrzeug nach einem der Ansprüche 7 bis 9,
**dadurch gekennzeichnet,**
**dass** die Gehäusewandung (10; 110) und/oder die thermisch isolierende Wandung (16; 116) im Bereich der autonomen Stromversorgungseinrichtung (3; 103) brandhemmend ausgebildet ist.

11. Thermofahrzeug nach einem der vorhergehenden Ansprüche,
**dadurch gekennzeichnet,**
**dass** die Temperiereinrichtung (2; 102; 200) eine Kühleinrichtung (20; 120; 220) und/oder eine Heizeinrichtung aufweist.

12. Thermofahrzeug nach einem der vorhergehenden Ansprüche,
**dadurch gekennzeichnet,**
**dass** das Thermofahrzeug (5; 105) eine Bremsenergierückgewinnungseinrichtung aufweist, die beim Bremsen rekuperierte elektrische Energie in die Antriebs-Stromversorgungseinrichtung (5'; 105') und/oder in die autonome Stromversorgungseinrichtung (3; 103) einspeist.

13. Thermofahrzeug nach einem der vorhergehenden Ansprüche,
**dadurch gekennzeichnet,**
**dass** das Thermofahrzeug (5; 105) eine elektrische Heizung für die Fahrerkabine (8; 108) aufweist und dass die elektrische Heizung von der autonomen Stromversorgungseinrichtung (3; 103) der temperierbaren, thermisch isolierten Zelle (4; 100) zumindest teilweise mit elektrischer Energie versorgt wird.

14. Thermofahrzeug nach einem der vorhergehenden Ansprüche,
**dadurch gekennzeichnet,**
**dass** die von einem nicht den Innenraum (14; 114) der temperierbaren, thermisch isolierten Zelle (4; 100) temperierenden Wärmetauscher (206) abgegebene Wärme beziehungsweise Kälte zur Klimatisierung der Fahrerkabine (8; 108) des Thermofahrzeugs (5; 105) genutzt wird.

15. Thermofahrzeug nach einem der vorhergehenden Ansprüche,
**dadurch gekennzeichnet,**
**dass** eine Photovoltaikeinrichtung (7) vorgesehen ist, die der Speichereinrichtung (30; 130; 230) für elektrische Energie und/oder der Temperiereinrichtung (2; 102; 200) elektrische Energie zuführt.

## Claims

1. Thermal vehicle having a temperature-controllable, thermally insulated cell which is provided with
- a housing (1; 101) having a housing wall (10; 110);
- a thermally insulating wall (16; 116) which bounds a temperature-controllable interior space (14; 114) and has at least one thermally sealingly closable access opening (12; 112) to the interior space (14; 114);
- an electrically operable temperature-control device (2; 102; 200) for temperature-control of the interior space (14; 114) and
- an autonomous power supply device (3; 103; 203) for the temperature-control device (2; 102; 200), which is configured so that the power supply for the temperature-control device takes place independently of the vehicle resources in a self-sufficient and emission-free manner,
- wherein the thermal vehicle (5; 105) is electrically drivable and has at least one electric drive machine and a drive power supply device (5'; 105') supplying the drive machine with electrical energy.

2. Thermal vehicle according to claim 1, **characterised in that** the autonomous power supply device (3; 103) for the temperature-controllable, thermally insulated cell (4; 100) is provided in addition to and separately from the drive power supply device (5'; 105').

3. Thermal vehicle according to claim 1 or 2, **characterised in that** the electrically operable temperature-control device (2; 102; 200) comprises a compressor (204) which is drivable by an electric motor (205), a condenser heat-exchanger (206) for a heat transfer medium, said condenser heat-exchanger being provided with an electric fan (207), and also comprises an expander (212) and an evaporation heat-exchanger (214) which is provided with an electric fan (215), wherein the heat transfer medium flows in a circuit (202) connecting the compressor (204), the condenser heat-exchanger (206), the expander (212) and the evaporation heat-exchanger (214) to one another.

4. Thermal vehicle according to claim 3, **characterised in that** the control or regulation of the fan (215) which is associated with the heat exchanger (214) provided in the interior space (14, 114) is carried out in such a way that the fan (215) still runs even when the drive (205) of the compressor (204) has been switched off.

5. Thermal vehicle according to one of the preceding claims, **characterised in that** the autonomous power supply device (3; 103; 203) comprises a storage device (30; 130; 230) for electrical energy, preferably a rechargeable battery arrangement and/or a fuel cell arrangement.

6. Thermal vehicle according to one of the preceding claims, **characterised in that** the housing wall (110) of the temperature-controllable, thermally insulated cell (100) is formed at least partially from the bodywork (104) of the thermal vehicle (105).

7. Thermal vehicle according to one of the preceding claims, **characterised in that** the autonomous power supply device (3; 103) or a part thereof is provided between the housing wall (10; 110) and the thermally insulating wall (16; 116).

8. Thermal vehicle according to claim 7, **characterised in that** the autonomous power supply device (3; 103) or a part thereof at least partially engages in an associated recess (15; 115) of the thermally insulating wall (16; 116).

9. Thermal vehicle according to claim 7 or 8, **characterised in that**, in the region of the autonomous power supply device (3; 103) in the housing wall (10; 110) and/or in the thermally insulating wall (16; 116), there is provided at least one closable opening (13'; 113') for access to the autonomous power supply device (3; 103) or to parts thereof.

10. Thermal vehicle according to one of the claims 7 to 9, **characterised in that** the housing wall (10; 110) and/or the thermally insulating wall (16; 116) in the region of the autonomous power supply device (3; 103) is configured to be fire-retarding.

11. Thermal vehicle according to one of the preceding claims, **characterised in that** the temperature-control device (2; 102; 200) comprises a cooling device (20; 120; 220) and/or a heating device.

12. Thermal vehicle according to one of the preceding claims, **characterised in that** the thermal vehicle (5; 105) comprises a braking energy recovery device which, during braking, feeds recovered electrical energy into the drive power supply device (5'; 105') and/or into the autonomous power supply device (3; 103) .

13. Thermal vehicle according to one of the preceding claims, **characterised in that** the thermal vehicle (5; 105) has an electric heater for the driver cabin (8; 108) and **in that** the electric heater is supplied at least partially with electrical energy by the autonomous power supply device (3; 103) of the temperature-controllable, thermally insulated cell (4; 100).

14. Thermal vehicle according to one of the preceding claims, **characterised in that** the heat or cold emitted by a temperature-controlling heat-exchanger (206) not temperature-controlling the interior space (14; 114) of the temperature-controllable, thermally insulated cell (4; 100) is used for air-conditioning of the driver cabin (8; 108) of the thermal vehicle (5; 105).

15. Thermal vehicle according to one of the preceding claims, **characterised in that** a photovoltaic device (7) is provided which supplies electrical energy to the storage device (30; 130; 230) for electrical energy and/or to the temperature-control device (2; 102; 200).

## Revendications

1. Véhicule thermique avec une cellule isolée thermiquement et capable d'être tempérée, qui est doté de
- un boîtier (1 ; 101) présentant une paroi de boîtier (10 ; 110) ;
- une paroi d'isolation thermique (16 ; 116), qui délimite un espace intérieur (14 ; 114) capable d'être tempéré et présente au moins une ouverture d'accès (12 ; 112), capable d'être fermée de manière étanche sur le plan thermique, vers l'espace intérieur (14 ; 114) ;
- un système de températion (2 ; 102 ; 200) à fonctionnement électrique pour tempérer l'espace intérieur (14 ; 114) et
- un système d'alimentation électrique autonome (3 ; 103 ; 203) pour le système de températion (2 ; 102 ; 200), qui est conçu de telle façon que l'alimentation électrique pour le système de températion a lieu de manière autarcique et sans émission indépendamment des ressources du véhicule,
- dans lequel le véhicule thermique (5 ; 105) fonctionne de manière électrique et comprend au moins un moteur d'entraînement électrique ainsi qu'un système d'alimentation électrique d'entraînement (5' ; 105') qui alimente en énergie électrique le moteur d'entraînement.

2. Véhicule thermique selon la revendication 1,
**caractérisé en ce que**
le système d'alimentation électrique autonome (3 ; 103) pour la cellule isolée thermiquement et capable d'être tempérée (4 ; 100) est prévu en supplément de et séparément du système d'alimentation électrique d'entraînement (5' ; 105').

3. Véhicule thermique selon la revendication 1 ou 2,
**caractérisé en ce que** le système de températion (2 ; 102 ; 200) à fonctionnement électrique comprend un compresseur (204) susceptible d'être entraîné par un moteur électrique (205), un échangeur de chaleur à condenseur (206) doté d'un ventilateur électrique (207) pour un agent caloporteur, un détendeur (212) et un échangeur de chaleur à évaporateur (214) doté d'un ventilateur électrique (215), dans lequel l'agent caloporteur s'écoule dans un circuit (202) qui relie les uns aux autres le compresseur (204), l'échangeur de chaleur à condenseur (206), le détendeur (212) et l'échangeur de chaleur à évaporateur (214).

4. Véhicule thermique selon la revendication 3,
**caractérisé en ce que** la commande ou la régulation du ventilateur (215), qui est associé à l'échangeur de chaleur (214) prévu dans l'espace intérieur (14, 114), a lieu de telle façon que le ventilateur (215) fonctionne encore même si l'entraînement (205) du compresseur (204) a été arrêté.

5. Véhicule thermique selon l'une des revendications précédentes,
**caractérisé en ce que** le système d'alimentation électrique autonome (3 ; 103 ; 203) comprend un dispositif d'accumulation (30 ; 130 ; 230) pour de l'énergie électrique, de préférence un groupe de batteries rechargeables et/ou un groupe de cellules à combustible.

6. Véhicule thermique selon l'une des revendications précédentes,
**caractérisé en ce que** la paroi de boîtier (110) de la cellule (100) isolée thermiquement et capable d'être tempérée est formée au moins par portion par la carrosserie (104) du véhicule thermique (105).

7. Véhicule thermique selon l'une des revendications précédentes,
**caractérisé en ce que** le système d'alimentation électrique autonome (3 ; 103) ou une partie de celui-ci est prévue entre la paroi de boîtier (10 ; 110) et la paroi d'isolation thermique (16 ; 116).

8. Véhicule thermique selon la revendication 7,
**caractérisé en ce que** le système d'alimentation électrique autonome (3 ; 103) ou une partie de celui-ci s'engage au moins partiellement dans un évidement associé (15 ; 115) de la paroi d'isolation thermique (16 ; 116).

9. Véhicule thermique selon la revendication 7 ou 8,
**caractérisé en ce que**, dans la région du système d'alimentation électrique autonome (3 ; 103), il est prévu dans la paroi de boîtier (10 ; 110) et/dans la paroi d'isolation thermique (16 ; 116) au moins une ouverture (13' ; 113') capable d'être refermée pour l'accès au système d'alimentation électrique autonome (3 ; 103) ou à des parties de celui-ci.

10. Véhicule thermique selon l'une des revendications 7 à 9,
**caractérisé en ce que** la paroi de boîtier (10 ; 110) et/ou la paroi d'isolation thermique (16 ; 116) est réalisée de manière ignifuge dans la région du système d'alimentation électrique autonome (3 ; 103).

11. Véhicule thermique selon l'une des revendications précédentes,
**caractérisé en ce que** le système de températion (2 ; 102 ; 200) comprend un système de refroidissement (20 ; 120 ; 220) et/ou un système de chauffage.

12. Véhicule thermique selon l'une des revendications précédentes,
**caractérisé en ce que** le véhicule thermique (5 ; 105) comprend un moyen de récupération d'énergie de freinage qui injecte l'énergie électrique récupérée lors du freinage dans le système d'alimentation électrique d'entraînement (5' ; 105') et/ou dans le système d'alimentation électrique autonome (3 ; 103).

13. Véhicule thermique selon l'une des revendications précédentes,
**caractérisé en ce que** le véhicule thermique (5 ; 105) comprend un chauffage électrique pour la cabine du conducteur (8 ; 108), et **en ce que** le chauffage électrique est alimenté au moins partiellement en énergie électrique par le système d'alimentation électrique autonome (3 ; 103) de la cellule (4 ; 100) thermiquement isolée et capable d'être tempérée.

14. Véhicule thermique selon l'une des revendications précédentes,
**caractérisé en ce que** la chaleur ou le froid dégagé par un échangeur de chaleur (206) qui n'assure pas la températion de l'espace intérieur (14 ; 114) de la cellule (4 ; 100) thermiquement isolée et susceptible d'être tempérée est utilisé(e) pour la climatisation de la cabine du conducteur (8 ; 108) du véhicule thermique (5 ; 105).

15. Véhicule thermique selon l'une des revendications précédentes,
**caractérisé en ce qu'**il est prévu un dispositif photovoltaïque (7) qui apporte de l'énergie électrique au dispositif accumulateur (30 ; 130 ; 230) pour l'énergie électrique et/ou au système de températion (2 ; 102 ; 200).
